# EUROPEAN PATENT APPLICATION

(11) **EP 4 434 920 A1**
(43) Date of publication of application: **25.09.2024**
(21) Application number: 22914579.2
(22) Date of filing: 23.12.2022
(51) Int. Cl.: B65G 35/00, B65G 41/00, B65G 47/88, B65G 37/00

(54) **CONVEYING TRACK**

(30) Priority: 29.12.2021 CN 202111637360; 29.12.2021 CN 202123365585 U
(71) Applicant: Autobio Labtec Instruments Co., Ltd., Zhengzhou, Henan 450016 (CN)
(72) Inventor: ZHAO, Peng, Zhengzhou, Henan 450016 (CN); XU, Can, Zhengzhou, Henan 450016 (CN); YIN, Shuaifeng, Zhengzhou, Henan 450016 (CN); ZHAO, Chao, Zhengzhou, Henan 450016 (CN); SUN, Xudong, Zhengzhou, Henan 450016 (CN); WU, Baojun, Zhengzhou, Henan 450016 (CN); ZHU, Zhiguang, Zhengzhou, Henan 450016 (CN); HOU, Jianping, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2022/141641
(87) International publication number: WO 2023/125325

(57) **Abstract**

Disclosed in the present invention is a conveying track, comprising a frame, wherein a delivery track is arranged on the frame, and is formed by assembling one or more kinds of H-shaped tracks, T-shaped tracks, L-shaped tracks, U-shaped tracks and I-shaped tracks, and a sample blocking device and/or a diversion device are/is arranged on the delivery track. The conveying track of the present invention has a more flexible track layout, and satisfies the diversified layout requirements of a laboratory delivery system, and thus the installation efficiency of the track is improved.

## Description

The present application claims the priority of the Chinese Patent Application No. 202111637360.9, titled "CONVEYING TRACK", filed on December 29, 2021 with the China National Intellectual Property Administration and the priority of the Chinese Patent Application No. 202123365585.1, titled "CONVEYING TRACK", filed on December 29, 2021 with the China National Intellectual Property Administration, both of which are incorporated herein by reference in their entireties.

### FIELD

The present application relates to the technical field of experimental sample delivering, and in particular to a conveying track.

### BACKGROUND

With the development of social biomedical science, a laboratory medicine has been widely applied in current society, leading to a significant increase in the number of laboratory tests in hospitals. Modern medical laboratory testing lines are gradually emerging in people's vision. The current medical laboratory testing line refers to a small testing line with multiple analytical instruments in parallel or an overall testing line in combination of laboratory biochemical, immunological, and urinary instruments, which are used to deliver medical test samples, such as blood or urine, to the analytical instrument for testing.

At present, in order to facilitate delivering test samples between various testing instruments in the medical laboratory, these testing instruments are connected through a conveying track. The current track in commercial has a single module size and shape. In case that the space in the laboratory site is limited, the layout of the conveying track may simply be single, which cannot be flexibly arranged, resulting in a low installation efficiency.

### SUMMARY

In view of above, a conveying track is provided in the present application. The layout of the conveying track is flexible, which meets the diverse layout requirements of the laboratory conveying system and improves the installation efficiency of the conveying track.

In order to achieve the above object, the following technical solution is provided.

A conveying track includes a rack on which a delivering track is provided, the delivering track is formed by one of or combining at least two of an H-shaped track assembly, a T-shaped track assembly, an L-shaped track assembly, a U-shaped track assembly and an I-shaped track assembly, and the delivering track is provided with a sample blocking device and a sample reserving device.

In an embodiment, the delivering track includes an upper delivering track and a lower delivering track, which are located on different horizontal planes, and the lower delivering track is configured to transmit a sample tray without samples.

In an embodiment, the H-shaped track assembly includes a first H-shaped sub track, a second H-shaped sub track, a third H-shaped sub track, a fourth H-shaped sub track, and a fifth H-shaped sub track, the first H-shaped sub track, the second H-shaped sub track, the third H-shaped sub track, and the fourth H-shaped sub track are located on an upper plane, and the fifth H-shaped sub track is located on a lower plane.

In an embodiment, the first H-shaped sub track and the second H-shaped sub track are arranged along a main delivering direction, the third H-shaped sub track and the fourth H-shaped sub track are both configured to connect the first H-shaped sub track with the second H-shaped sub track, the first H-shaped sub track and the second H-shaped sub track are arranged in parallel, and the third H-shaped sub track and the fourth H-shaped sub track are arranged in parallel, and the fifth H-shaped sub track is arranged along the main delivering direction.

In an embodiment, the T-shaped track assembly includes a first T-shaped sub track, a second T-shaped sub track, a third T-shaped sub track, a fourth T-shaped sub track, a fifth sub track of the T-shaped track assembly and a sixth T-shaped sub track, the first T-shaped sub track, the second T-shaped sub track, the third T-shaped sub track and the fourth T-shaped sub track are located on the upper plane, and the fifth T-shaped sub track and the sixth T-shaped sub track are located on the lower plane.

In an embodiment, the first T-shaped sub track and the second T-shaped sub track are arranged along the main delivering direction, the third T-shaped sub track and the fourth T-shaped sub track are both connected to the second T-shaped sub track, and the third T-shaped sub track and the fourth T-shaped sub track are arranged perpendicular to the second T-shaped sub track, the fifth T-shaped sub track is arranged along the main delivering direction, and the sixth T-shaped sub track is perpendicularly connected to the fifth T-shaped sub track.

In an embodiment, the L-shaped track assembly includes a first L-shaped sub track, a second L-shaped sub track and a third L-shaped sub track, the first L-shaped sub track and the second L-shaped sub track are located on the upper plane, the third L-shaped sub track is located on the lower plane, and the first L-shaped sub track, the second L-shaped sub track, and the third L-shaped sub track are all in type of a bent track with a same bending direction.

In an embodiment, the I-shaped track assembly includes a first I-shaped sub track, a second I-shaped sub track, and a third I-shaped sub track, the first I-shaped sub track and the second I-shaped sub track are located on the upper plane, and the third I-shaped sub track is located on the lower plane, and the first I-shaped sub track, the second I-shaped sub track, and the third I-shaped sub track are all straight tracks, which are all arranged along the main delivering direction.

In an embodiment, the U-shaped track assembly is a single-layer U-shaped track.

In an embodiment, the delivering track includes the H-shaped track assembly, the I-shaped track assembly, and the T-shaped track assembly, which are arranged in sequence.

As described above, in the delivering track of the present application, tracks with different structures can be chosen and combined together according to an on-site space or an arrangement of detection instruments, which obtains a modular assembly of the delivering track and improves the installation efficiency of the track. In the conveying track, a combining of track modules with different structures are obtained. The shape of the track modules is diverse, and the layout of the delivering tracks are more flexible in a limited space at the laboratory site, which meets diversified layout requirements of the laboratory delivering system to the delivering track of the present application.

### BRIEF DESCRIPTION OF THE DRAWINGS

In order to clearly describe embodiments of the present application or technical solutions in the conventional technology, a brief introduction will be made to the accompanying drawings in the embodiments or conventional technology. Apparently, the accompanying drawings in the following description are only some embodiments of the present application. For those skilled in the art, other accompanying drawings can be also obtained based on these drawings without paying a creative work.
FIG. 1 is a schematic structural view of a conveying track in an embodiment of the present application;
FIG. 2 is a schematic structural view of the conveying track in another embodiment of the present application;
FIG. 3 is a schematic structural view of an upper conveying track of a H-shaped track assembly in an embodiment of the present application;
FIG. 4 is a schematic structural view of a lower conveying track of the H-shaped track assembly in an embodiment of the present application;
FIG. 5 is a schematic structural side view of the H-shaped track assembly in an embodiment of the present application;
FIG. 6 is a schematic structural view of an upper conveying track of a T-shaped track assembly in an embodiment of the present application;
FIG. 7 is a schematic structural view of a lower conveying track of the T-shaped track assembly in an embodiment of the present application;
FIG. 8 is a schematic structural side view of the T-shaped track assembly in an embodiment of the present application;
FIG. 9 is a schematic structural view of an upper conveying track of a L-shaped track assembly in an embodiment of the present application;
FIG. 10 is a schematic structural view of a lower conveying track of the L-shaped track assembly in an embodiment of the present application;
FIG. 11 is a schematic structural view of a U-shaped track assembly in an embodiment of the present application;
FIG. 12 is a schematic structural view of an upper conveying track of an I-shaped track assembly in an embodiment of the present application;
FIG. 13 is a schematic structural view of a lower conveying track of the I-shaped track assembly in an embodiment of the present application;
FIG. 14 is a schematic structural side view of the I-shaped track assembly in an embodiment of the present application.

### Numeral References:

| | |
|---|---|
| 1 front lifting device, | 2 H-shaped track assembly, |
| 201 first sub track of the H-shaped track assembly, | |
| 202 second sub track of the H-shaped track assembly, | |
| 203 third sub track of the H-shaped track assembly, | |
| 204 fourth sub track of the H-shaped track assembly, | |
| 205 fifth sub track of the H-shaped track assembly, | |
| 206 second reversing device of the H-shaped track assembly, | |
| 207 fourth reversing device of the H-shaped track assembly, | |
| 208 third reversing device of the H-shaped track assembly, | |
| 209 first reversing device of the H-shaped track assembly, | |
| 210 first blocking device of the H-shaped track assembly, | |
| 211 second blocking device of the H-shaped track assembly, | |
| 3 I-shaped track assembly, | |
| 301 first sub track of the I-shaped track assembly, | |
| 302 second sub track of the I-shaped track assembly, | |
| 303 third sub track of the I-shaped track assembly, | |
| 4 T-shaped track assembly, | |
| 401 first sub track of the T-shaped track assembly, | |
| 402 second sub track of the T-shaped track assembly, | |
| 403 third sub track of the T-shaped track assembly, | |
| 404 fourth sub track of the T-shaped track assembly, | |
| 405 fifth sub track of the T-shaped track assembly, | |
| 406 sixth sub track of the T-shaped track assembly, | |
| 407 first reversing device of the T-shaped track assembly, | |
| 408 first blocking device of the T-shaped track assembly, | |
| 409 third reversing device of the T-shaped track assembly, | |
| 410 third block device of the T-shaped track assembly, | |
| 411 second reversing device of the T-shaped track assembly, | |
| 412 second blocking device of the T-shaped track assembly, | |
| 413 fourth blocking device of the T-shaped track assembly, | |
| 5 rack, | 6 rear lifting device, |
| 7 sample post-treatment zone, | 8 first analytical instrument, |
| 9 second analytical instrument, | 10 U-shaped track assembly, |
| 1001 U-shaped track, | 11 sample pre-treatment zone, |
| 12 L-shaped track assembly, | |
| 1201 first sub track of the L-shaped track assembly, | |
| 1202 second sub track of the L-shaped track assembly, | |
| 1203 third sub track of the L-shaped track assembly | |

### DETAILED DESCRIPTION OF THE EMBODIMENTS

The present application discloses a conveying track, which has more flexible layouts, meeting the diverse layout requirements of laboratory delivering systems and improves the installation efficiency of the conveying track.

A clear and complete description of the technical solution in the embodiments of the present application in conjunction with the accompanying drawings is provided in the following. Apparently, the embodiments are only a part of the embodiments of the present application not all of them. Based on the embodiments in the present application, all other embodiments obtained by those skilled in the art without paying creative work fall within the scope of the present application.

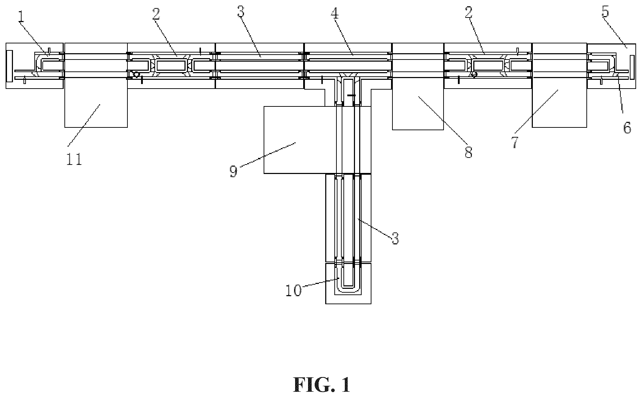

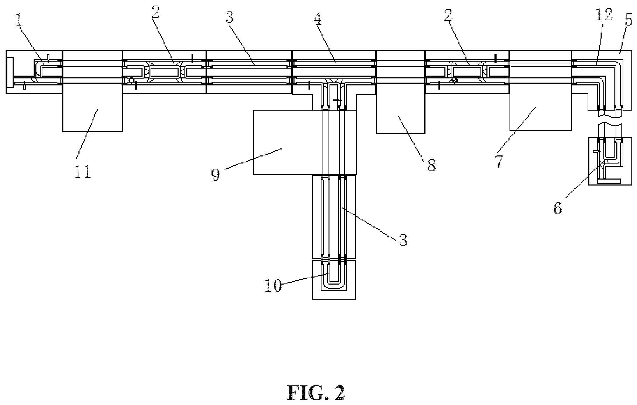

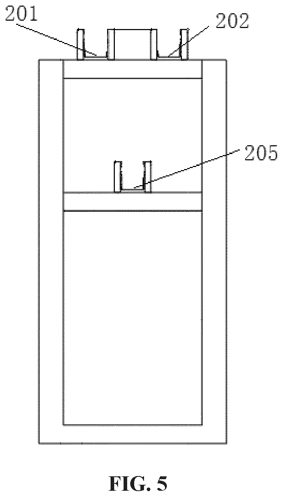

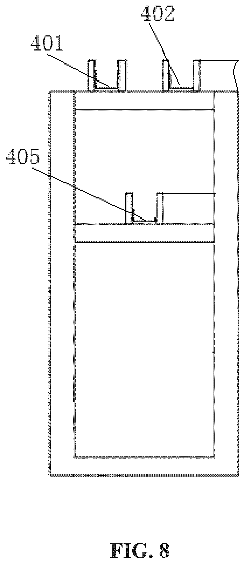

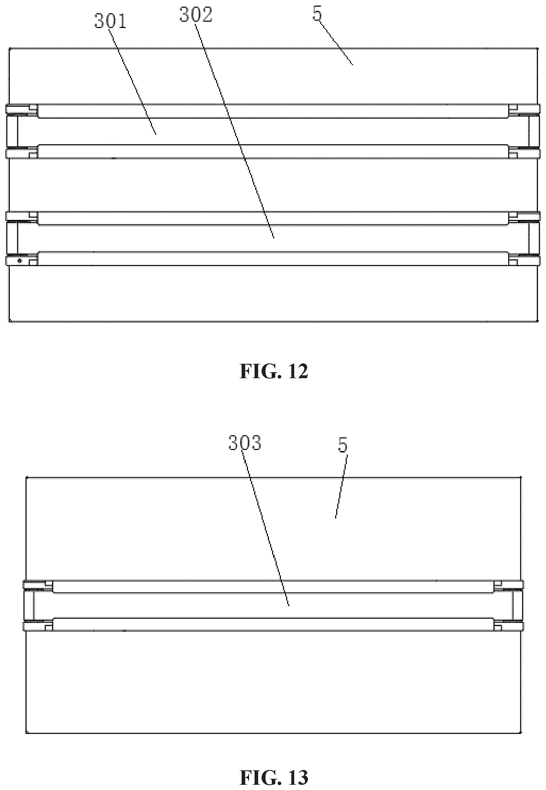

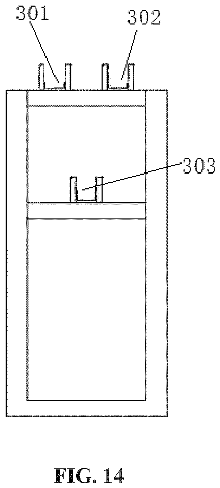

Referring to FIG. 1 to FIG. 14, a conveying track provided in the present application includes a rack 5, on which a delivering track is provided. The delivering track is equipped with a blocking device for samples and/or a reversing device for samples, and the delivering track is formed by one of or combining at least two of an H-shaped track assembly 2, a T-shaped track assembly 4, an L-shaped track assembly 12, a U-shaped track assembly 10 and an I-shaped track assembly 3.

Each of the H-shaped track assembly 2, the T-shaped track assembly 4, the L-shaped track assembly 12, the U-shaped track assembly 10 and the I-shaped track assembly 3 is a track module that forms a track.

In the conveying track of the present application, tracks with different structures can be chosen and combined together according to an on-site space or an arrangement of detection instruments, which obtains a modular assembly of the delivering track and improves the installation efficiency of the track. The conveying track can combine track modules with different structures. The shape of the track modules is diverse, and the layout of the conveying track is more flexible in a limited space at the laboratory site, which meets diversified layout requirements of the laboratory delivering system to the delivering track of the present application.

The delivering track comprises an upper delivering track and a lower delivering track, which are located on different horizontal planes. The planes where the upper delivering track and the lower delivering track are located are arranged in parallel. A starting end of the delivering track is equipped with a front lifting device 1, and a terminal end of the delivering track is equipped with a rear lifting device 6. The lower delivering track is used for delivering sample trays without samples, and the upper delivering track is used for delivering sample trays with samples. The front lifting device 1 delivers the sample trays without samples from the lower delivering track to the upper delivering track. The terminal end of the delivering track is equipped with a detection sensor, which determines whether the sample tray is with or without samples. The sample tray with samples circulates in the upper delivering track, and the sample tray without samples is delivered to the lower delivering track and returns back. The front lifting device 1 and the rear lifting device 6 are both the conventional lifting devices used in existing conveying production lines. The lifting device may be a hydraulic lifting device that drives the support frame to lift by means of a hydraulic cylinder, or other conventional power units used in the existing technology, which is not limited here.

Specifically, the upper delivering track is used for delivering sample trays with samples to be tested, and the lower delivering track is used for delivering sample trays without samples after testing. Compared with the case that the tracks in commercial are located in one single plane, since the sample trays are classified and delivered, the sample trays without samples do not need to make way for the sample trays with samples, which simplifies the delivering route, reduces the width of the track, saves space, improves the detection efficiency of the tested samples and the delivering speed of sample trays without samples, thereby resulting in a higher overall delivering efficiency.

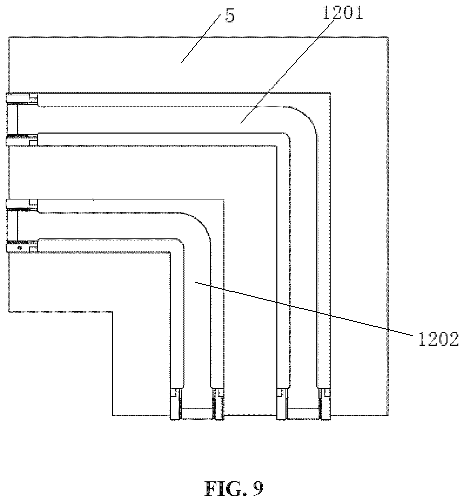

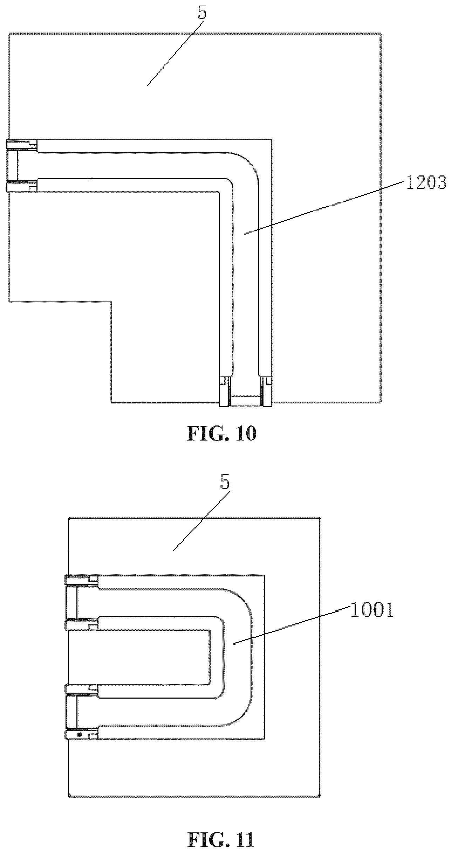

Furthermore, an upper track of the H-shaped track assembly 2 includes two parallel and straight delivering tracks, and a connecting and delivering track is provided between the two straight delivering tracks. A lower track is a straight delivering track. The upper track of the T-shaped track assembly 4 includes one straight delivering track and one T-shaped delivering track, and the lower track includes one T-shaped delivering track. The direction of the T-shaped delivering track of the upper track is the same with a sub track of the H-shaped track assembly of the T-shaped delivering track of the lower track. As shown in FIG. 9 and FIG. 10, the upper track of the L-shaped track assembly 12 includes two parallel delivering tracks that are bent into an L shape. The lower track is an L-shaped delivering track. The bending direction of the lower delivering track is the same with the upper delivering track. The upper track of the I-shaped track assembly 3 includes two parallel and straight delivering tracks, and the lower track includes one straight delivering track. The U-shaped track assembly 10 includes only one delivering track located in one single layer, which is a U-shaped track 1001. The U-shaped track 10 is located in the upper track and used for connecting ends of two parallel delivering tracks.

The reversing device is located at a position of an intersection of T-shape tracks, and the blocking device is located on a side of the delivering track as required. The blocking device and the reversing device are both the conventional devices used in the sample delivering track of the prior art. Specifically, the blocking device includes a power unit and a blocking structure. The blocking end of the blocking structure is arranged close to the delivering track. The power unit drives the blocking structure to move through a transmission structure so as to block or release the sample trays with samples. The reversing device comprises a power unit and a reversing structure, and the power unit of the reversing device drives the reversing structure to rotate in order to connect or cut off the corresponding conveying track.

Specifically, the H-shaped track assembly 2 includes a first H-shaped sub track 201, a second H-shaped sub track 202, a third H-shaped sub track 203, a fourth H-shaped sub track 204, and a fifth H-shaped sub track 205. The first H-shaped sub track 201, the second H-shaped sub track 202 , the third H-shaped sub track 203, and the fourth H-shaped sub track 204 are located on the upper plane, forming the upper delivering track. The fifth H-shaped sub track 205 is located on the lower plane, forming the lower delivering track. The first H-shaped sub track 201 and the second H-shaped sub track 202 are straight delivering tracks, which are in parallel and arranged along a main delivering direction (a length direction of the conveying track). The third H-shaped sub track 203 and the fourth H-shaped sub track 204 are both used to connect the first H-shaped sub track 201 with the second H-shaped sub track 202. The third H-shaped sub track 203 and the fourth H-shaped sub track 204 may be arranged in parallel or not. The third H-shaped sub track 203 and the fourth H-shaped sub track 204 may be arranged perpendicular to the first H-shaped sub track 201, or arranged at a set angle. The fifth H-shaped sub track 205 is arranged along the main delivering direction (the length direction of the conveying track).

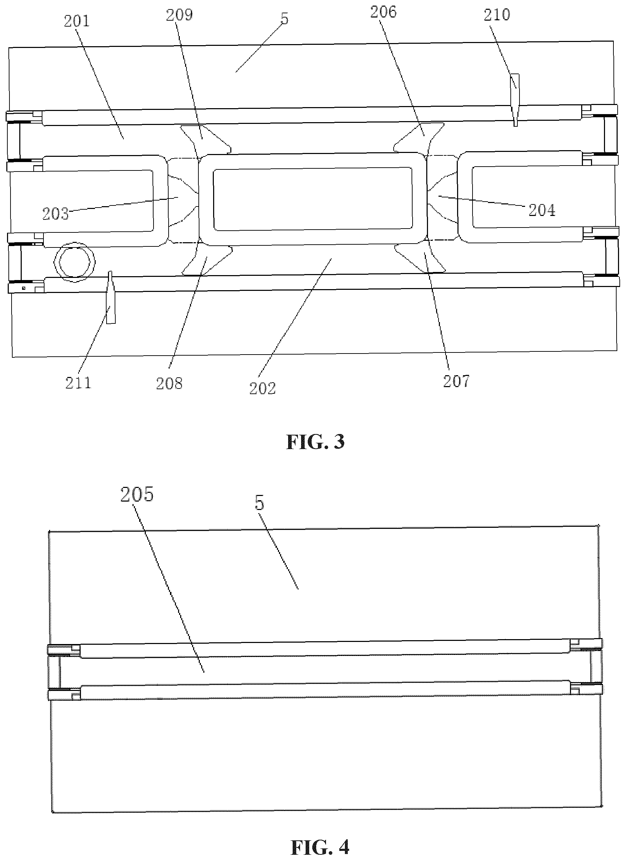

In an embodiment, as shown in FIG. 3, the sample is delivered from the left side along the second H-shaped sub track 202, and then turned to the third H-shaped sub track 203 through a third H-shaped track reversing device 208. The sample is then turned to the first H-shaped sub track 201 through a first H-shaped track reversing device 209.

In another embodiment, the sample is delivered along the first H-shaped sub track 201. The sample is traveled along the first H-shaped sub track 201, turned to the fourth H-shaped sub track 204 through a second H-shaped track reversing device 206, and then turned to the second H-shaped sub track 202 through a fourth H-shaped track reversing device 207. A second H-shaped track blocking device 211 is configured to control the sample on the second H-shaped sub track 202 to pass through or stop. A first H-shaped track blocking device 210 is configured to control the sample on the first H-shaped sub track 201 to pass through or stop. The installation position of the reversing structure of the reversing device can be adjusted according to the actual delivering direction so as to facilitate an adjustment of the delivering direction. FIG. 3 only shows an exemplary installation manner of the reversing device.

The T-shaped track assembly 4 includes a first T-shaped sub track 401, a second T-shaped sub track 402, a third T-shaped sub track 403, a fourth T-shaped sub track 404, a fifth T-shaped sub track 405, and a sixth T-shaped sub track 406. The first T-shaped sub track 401, the second T-shaped sub track 402, the third T-shaped sub track 403, and the fourth T-shaped sub track 404 are located on the upper plane to form the upper delivering track, and the fifth T-shaped sub track 405 and the sixth T-shaped sub track 406 are located on the lower plane to form the lower delivering track. A "one into two" conveying mode of the conveying track can be obtained by the T-shaped track assembly 4, and both ends of the T-shaped track assembly 4 can be further connected to other tracks or analytical instruments, which can extend the existing track.

Furthermore, the first T-shaped sub track 401 and the second T-shaped sub track 402 are arranged along the main delivering direction (the length direction of the conveying track), which are straight delivering tracks in parallel. The third T-shaped sub track 403 and the fourth T-shaped sub track 404 are both connected to the second T-shaped sub track 402. The third T-shaped sub track 403 and the fourth T-shaped sub track 404 may be arranged perpendicular to the second T-shaped sub track 402 or arranged at a set angle. The fifth T-shaped sub track 405 is arranged along the main delivering direction. The sixth T-shaped sub track 406 may be perpendicularly connected to the fifth T-shaped sub track 405 or may be arranged at a set angle with the fifth T-shaped sub track 405.

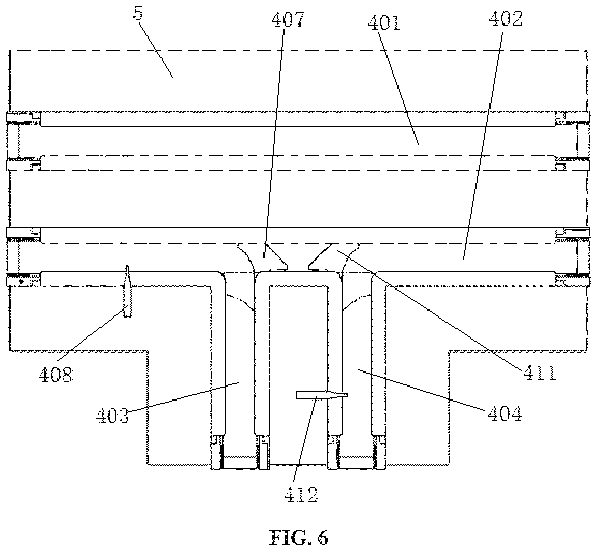

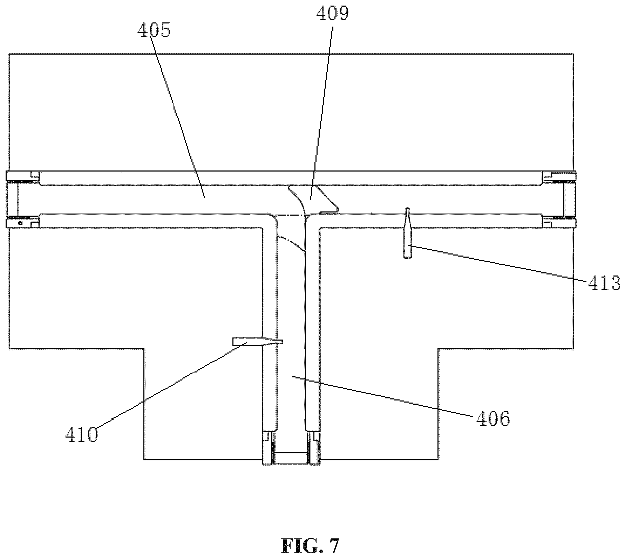

In an embodiment, as shown in FIG. 6 and FIG. 7, when being conveyed along the second T-shaped sub track 402, the sample is turned to and delivered on the third T-shaped sub track 403 through the first T-shaped track reversing device 407. When being conveyed along the fourth T-shaped sub track 404, the sample is turned to and delivered on the second T-shaped sub track 402 through the second T-shaped track reversing device 411. The first T-shaped track blocking device 408 is configured to control the sample on the second T-shaped sub track 402 to pass through or stop. The second T-shaped track blocking device 412 is configured to control the sample on the fourth T-shaped sub track 404 to pass through or stop. The fifth T-shaped sub track 405 and the sixth T-shaped sub track 406 are located on the lower layer. The sample is traveled along the sixth T-shaped sub track 406, and then turned to and traveled on the fifth T-shaped sub track 405 through the third T-shaped track reversing device 409. The third T-shaped track blocking device 410 is located on the sixth T-shaped sub track 406 to control the sample on the sixth T-shaped sub track 406 to pass through or stop. The fourth T-shaped track blocking device 413 is configured to control the sample on the fifth T-shaped sub track 405 to pass through or stop.

Specifically, the L-shaped track assembly 12 includes a first L-shaped sub track 1201, a second L-shaped sub track 1202, and a third L-shaped sub track 1203. The first L-shaped sub track 1201 and the second L-shaped sub track 1202 are located on the upper plane in parallel, forming the upper delivering track. The third L-shaped sub track 1203 is located on the lower plane, forming the lower delivering track. The first L-shaped sub track 1201, the second L-shaped sub track 1202, and the third L-shaped sub track 1203 are all in type of a bent track with a same bending direction. In a specific embodiment, each of these three sub tracks of the L-shaped track assembly has a bending angle of 90 degree. In other embodiments, the bending angle can also be varied, which is not limited here.

Accordingly, it can be understood that the I-shaped track assembly 3 includes a first sub track of the I-shaped track assembly 301, a second I-shaped sub track 302, and a third sub track of the I-shaped track assembly 303. The first I-shaped sub track 301 and the second I-shaped sub track 302 are located on the upper plane, forming the upper delivering track. The third I-shaped sub track 303 is located on the lower plane, forming the lower delivering track. The first I-shaped sub track 301, the second I-shaped sub track 302, and the third I-shaped sub track 303 are all straight tracks, and all these three sub tracks of the I-shaped track assembly are arranged along the main delivering direction.

The U-shaped track assembly 10 is a single-layer U-shaped track assembly, which is only located in the upper track for connecting the ends of two parallel delivering tracks.

In a specific embodiment, the delivering track comprises the front lifting device 1, a sample pre-treatment zone 11, the H-shaped track assembly 2, the I-shaped track assembly 3, and the T-shaped track assembly 4 arranged in sequence. Two exiting ends of the T-shaped track assembly 4 are provided, with one exiting end being connected to the first analytical instrument 8 and the other exiting end being connected to the second analytical instrument 9. The first analytical instrument 8 is connected to the sample post-processing zone 7 through another H-shaped track assembly 2, and the sample post-processing zone 7 is connected to the lower track through the rear lifting device 6. The second analytical instrument 9 is connected to the U-shaped track assembly 10 through another I-shaped track assembly 3. The U-shaped track assembly 10 is connected to the first I-shaped sub track 301 and the second I-shaped sub track 302 of the I-shaped track assembly 3 so as to deliver the sample tray tested by the second analytical instrument 9 back to the main delivering track, as shown in FIG. 1. In the H-shaped track assembly 2 and the T-shaped track assembly 4, the blocking devices and reversing devices are installed at corresponding positions according to conveying requirements such as sample pause, U-turn, or turning.

In another specific embodiment, the track is turned through the L-shaped track assembly 12 after passing though the sample post-processing zone 7, and can be further extended as needed to connect other tracks or analytical instruments. The most last end of the track is then connected to the rear lifting device 6. The other structures are the same with the previous embodiment and are not repeated here.

In arranging, the first sub tracks with different track assemblies are sequentially connected end to end, and the second tracks with different track assemblies are sequentially connected end to end. When encountering a "three-way intersection" on the delivering line, that is, when it needs to determine the sample delivering direction on the track, such as for the H-shaped track assembly 2 and the T-shaped track assembly 4, the blocking device and reversing device are needed. In case of only one delivering direction or a fixed delivering line, such as for the L-shaped track assembly 12, the U-shaped track assembly 10, or the I-shaped track assembly 3, the blocking device and reversing device are not needed.

The blocking device is located at a front end of "three-way intersection" along the delivering line, herein the front end refers to the position where the sample arrives first during delivering, and the reversing device is located on a side of a reversing intersection. When being delivered to the "three-way intersection", the sample is first stopped by the blocking device to determine whether the delivering direction is to travel straight or change a direction. If a direction changing is required, the reversing device is activated, and if a straight travel is required, the reversing device is turned off. The track of the present application adopts a way of belt conveying.

The conveying track of the present application applies a modular structure, which can obtain various layout schemes. The layout of the laboratory track conveying system can be flexibly constructed according to the space of the laboratory site, and the laboratory space can be reasonably utilized. The track adopts a two-layer design, which can keep trays with samples and trays without samples in separate layers.

In the description of the present application, it should be understood that the terms "upper", "lower", "vertical", "inner", "outer", etc. indicate that the orientation or position relationship is based on the orientation or position relationship shown in the accompany drawings, which are only for the convenience of describing the present application and simplifying the description rather than indicating or implying that the referred device or component must have a specific orientation and be constructed and operated in a specific orientation, and thus cannot be understood as a limitation of the present application.

In addition, the terms "first", "second" are only used to describe the purpose and cannot be understood as indicating or implying relative importance or implying the quantity of the indicated technical features. Therefore, the features limited by "first" and "second" can explicitly or implicitly include one or more of these features. In the context of the present application, "multiple" refers to two or more, unless otherwise specified.

The various embodiments in the present application are described in a progressive manner, and each embodiment focuses on the differences from other embodiments. The same and similar parts between each embodiment can be referred to each other.

The above explanation of the disclosed embodiments enables those in the art to implement or apply the present application. The various modifications to these embodiments will be apparent to those in the art, and the general concept defined in the present application can be implemented in other embodiments without departing from the spirit or scope of the present application. Therefore, the present application will not be limited to the embodiments shown herein, but will conform to the widest range consistent with the concept and novel features disclosed herein.

## Claims

1. A conveying track, comprising a rack, on which a delivering track is provided, wherein
the delivering track is formed by one of or combining at least two of an H-shaped track assembly, a T-shaped track assembly, an L-shaped track assembly, a U-shaped track assembly and an I-shaped track assembly,
the delivering track is provided with a blocking device for samples and/or a reserving device for samples.

2. The conveying track according to claim 1, wherein
the delivering track comprises an upper delivering track and a lower delivering track, which are located on different horizontal planes,
the lower delivering track is configured to deliver a sample tray without samples.

3. The conveying track according to claim 1, wherein
the H-shaped track assembly comprises a first H-shaped sub track, a second H-shaped sub track, a third H-shaped sub track, a fourth H-shaped sub track, and a fifth H-shaped sub track,
the first H-shaped sub track, the second H-shaped sub track, the third H-shaped sub track, and the fourth H-shaped sub track are located on an upper plane, and the fifth H-shaped sub track is located on a lower plane.

4. The conveying track according to claim 3, wherein
the first H-shaped sub track and the second H-shaped sub track are arranged along a main delivering direction, and the third H-shaped sub track and the fourth H-shaped sub track are both configured to connect the first H-shaped sub track with the second H-shaped sub track,
the first H-shaped sub track and the second H-shaped sub track are arranged in parallel, and the third H-shaped sub track and the fourth H-shaped sub track are arranged in parallel,
the fifth H-shaped sub track is arranged along the main delivering direction.

5. The conveying track according to claim 1, wherein
the T-shaped track assembly comprises a first T-shaped sub track, a second T-shaped sub track, a third T-shaped sub track, a fourth T-shaped sub track, a fifth T-shaped sub track, and a sixth T-shaped sub track,
the first T-shaped sub track, the second T-shaped sub track, the third T-shaped sub track and the fourth T-shaped sub track are located on the upper plane, and
the fifth T-shaped sub track and the sixth T-shaped sub track are located on the lower plane.

6. The conveying track according to claim 5, wherein
the first T-shaped sub track and the second T-shaped sub track are arranged along the main delivering direction, the third T-shaped sub track and the fourth T-shaped sub track of are both connected to the second T-shaped sub track, and the third T-shaped sub track and the fourth T-shaped sub track are arranged perpendicular to the second T-shaped sub track of the track assembly,
the fifth sub track of the T-shaped track assembly is arranged along the main delivering direction, and the sixth T-shaped sub track is perpendicularly connected to the fifth T-shaped sub track.

7. The conveying track according to claim 1, wherein
the L-shaped track assembly comprises a first L-shaped sub track, a second L-shaped sub track and a third L-shaped sub track,
the first L-shaped sub track and the second L-shaped sub track are located on the upper plane, and the third L-shaped sub track is located on the lower plane,
the first L-shaped sub track, the second L-shaped sub track, and the third L-shaped sub track are all in type of a bent track with a same bending direction.

8. The conveying track according to claim 1, wherein
the I-shaped track assembly comprises a first I-shaped sub track, a second I-shaped sub track, and a third I-shaped sub track,
the first I-shaped sub track and the second I-shaped sub track are located on the upper plane, and the third I-shaped sub track is located on the lower plane,
the first I-shaped sub track, the second I-shaped sub track, and the third I-shaped sub track are all straight tracks, which are all arranged along the main delivering direction.

9. The conveying track according to claim 1, wherein the U-shaped track assembly is a single-layer U-shaped track.

10. The conveying track according to claim 1, wherein the delivering track comprises the H-shaped track assembly, the I-shaped track assembly, and the T-shaped track assembly, which are arranged in sequence.
